(19) Europäisches Patentamt / European Patent Office / Office européen des brevets

(11) **EP 3 851 564 B1**

(12) **EUROPEAN PATENT SPECIFICATION**

(45) Date of publication and mention
of the grant of the patent:
**15.10.2025  Bulletin 2025/42**

(21) Application number: **19859811.2**

(22) Date of filing: **06.09.2019**

(51) International Patent Classification (IPC):
*D01F 6/04* (2006.01)   *F03G 7/06* (2006.01)
*H02N 10/00* (2006.01)   *D01F 6/12* (2006.01)
*D01F 6/60* (2006.01)   *D01F 6/62* (2006.01)
*D02G 1/00* (2006.01)

(52) Cooperative Patent Classification (CPC):
**F03G 7/0612; D01F 6/04; D01F 6/12; D01F 6/60;
D01F 6/62; D02G 1/00; F03G 7/0616**

(86) International application number:
**PCT/JP2019/035266**

(87) International publication number:
**WO 2020/054633 (19.03.2020 Gazette 2020/12)**

(54) **FIBER FOR ACTUATORS, AND ACTUATOR AND FIBER PRODUCT USING SAME**

FASER FÜR AKTOREN SOWIE AKTOR UND FASERPRODUKT, DIE EINE SOLCHE FASER NUTZEN

FIBRE POUR ACTIONNEURS, ET ACTIONNEUR ET PRODUIT FIBREUX L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2018  JP 2018168810**

(43) Date of publication of application:
**21.07.2021  Bulletin 2021/29**

(73) Proprietor: **Toray Industries, Inc.**
**Tokyo 103-8666 (JP)**

(72) Inventors:
• **YAMANAKA Hirofumi**
**Mishima-shi, Shizuoka 411-8652 (JP)**
• **SATO Kirita**
**Mishima-shi, Shizuoka 411-8652 (JP)**
• **KANO Hidekazu**
**Mishima-shi, Shizuoka 411-8652 (JP)**

(74) Representative: **Mewburn Ellis LLP**
**Aurora Building**
**Counterslip**
**Bristol BS1 6BX (GB)**

(56) References cited:
WO-A1-2017/022146   WO-A2-2014/022667
JP-A- 2010 512 957   JP-A- 2015 533 521
JP-A- 2018 083 275   JP-A- H07 156 606
JP-A- S56 131 332   US-A1- 2017 035 550
US-A1- 2017 314 539

• CARTER S HAINES ET AL: "Artificial Muscles from Fishing Line and Sewing Thread", SCIENCE, AMERICAN ASSOCIATION FOR THE ADVANCEMENT OF SCIENCE, US; BIOSCIENCES INFORMATION SERVICE, PHILADELPHIA, PA, US, vol. 343, no. 6173, 21 February 2014 (2014-02-21), pages 868 - 872, XP002747796, ISSN: 0036-8075, DOI: 10.1126/ SCIENCE.1246906
• HAINES, C. ET AL.: "Artificial Muscles from Fishing Line and Sewing Thread", SCIENCE, vol. 343, 2014, pages 868 - 872, XP002747796, DOI: 10.1126/science.1246906

EP 3 851 564 B1

## Description

### TECHNICAL FIELD

The present invention relates to an actuator fiber having a coil spring shape capable of expanding and contracting by heating and cooling, and an actuator and a fiber product using the same.

### BACKGROUND ART

An actuator is a conversion device that converts physicochemical energy into mechanical displacement or force, and has been widely used in the related art as a driving source that operates various machines. In particular, motors, engines, cylinders, and the like that use electricity or magnetic force, expansion of gas, hydraulic pressure, air pressure, and the like as energy for driving can obtain very large displacement or force, and thus have been greatly developed as the driving source of machines.

As a trend in recent years, due to development of the electronic information industry, the robot industry, the medicine or bio-related industry, and the like, an actuator that is precisely driven in various fields such as semiconductor production or module assembly, pharmaceutical manufacture, and microbial culture is demanded. In addition, awareness of improvement in productivity and improvement in quality of life is increasing worldwide, and development of a robot, a device, or the like that supports a force necessary for walking or working by being worn by a person also advances. In particular, in a support robot or device represented by an assist suit, it is necessary to reduce a load on the person wearing the robot, the device, or the like to the utmost, and thus it is strongly demanded to reduce size and weight of the actuator. To satisfy such a demand for an actuator, mainly a motor, a cylinder, and the like have been reduced in size or miniaturized. However, making an actuator more precise and smaller in size and weight may meet a limit only by extension in the related art, and a next-generation actuator material which is different from that in the related art is demanded.

Under such a background, research and development of the next-generation actuator material have been vigorously progressed in various fields, and among the next-generation actuator material, an actuator material called an artificial muscle has attracted attention. The artificial muscle is an actuator material that obtains mechanical power by consuming energy like a muscle of a living body and causing a state change of a material. Artificial muscles such as a Mckibben material that operates by applying an air pressure to a rubber tube, a shape memory alloy material that contracts and expands by heating and cooling, a polymer gel material that expands and contracts by applying a voltage and discharging, and a material or a piezoelectric material using an electric or magnetic viscous fluid have been researched and developed.

In particular, a material using a polymer, which is advantageous for reducing the size and weight of the actuator, has attracted attention. However, there are problems that displacement or force to be generated is small and that most of the polymer gel material which has been researched and developed as the actuator material requires an electrolytic solution for driving, and thus an electrolytic solution supply tank is required and reduction in size is restricted.

Various efforts have been promoted to solve the problem of such a polymer actuator material. For example, Patent Literature 1 proposes a polymer actuator in which polymer fibers are twisted and a coil shape is imparted to generate reversible twisting and tension operation by thermal energy, and an electrolyte or a counter electrode and special packaging are not required.

Further, Patent Literature 2 proposes an actuator in which a fiber is folded so as to have a cylindrical coil shape, a material of the fiber is a linear low-density polyethylene and an average diameter of the coil is smaller than a fiber diameter, so that the actuator has a high variation rate. Non-Patent Literature 1 discloses artificial muscles from fishing line and sewing thread.

### CITATION LIST

Patent Literature 1: WO 2014/022667
Patent Literature 2: WO 2017/022146
Non-Patent Literature 1: Haines et al., Science, 2014, vol. 343, p. 868-872

### SUMMARY OF INVENTION

### TECHNICAL PROBLEM

However, in Patent Literature 1, there is a problem that it remains in an actual proof at the research level, and it does not reach a level that the polymer actuator can withstand actual use when incorporated in a fiber product such as clothes.

Further, in Patent Literature 2, since the average diameter of the coil is smaller than the fiber diameter, the actuator becomes a hard spring, and flexibility is poor in incorporation into a fiber product such as clothes.

Therefore, an object of the present invention is to provide an actuator fiber suitable for a flexible soft actuator that can be incorporated into a fiber product such as clothes.

SOLUTION TO PROBLEM

The above object is achieved by the following means. That is, the present invention is defined in the claims and includes a configuration of any one of the following (1) to (6).

(1) An actuator fiber made of a thermoplastic resin, the actuator fiber having a coil spring shape, in which a spring index D/d is 1.7 or more when an average diameter of a coil portion is represented by D and a fiber diameter is represented by d and in which the thermoplastic resin is selected from the group consisting of nylon 6,10, nylon 6,12, nylon 10,10, and a combination thereof.
(2) The actuator fiber according to the above (1), in which a glass transition point measured by a differential scanning calorimeter is 150°C or lower.
(3) The actuator fiber according to the above (1) or (2), in which a crystallinity calculated from a melting heat amount measured by a differential scanning calorimeter is in a range of 5% to 95%.
(4) The actuator fiber according to any one of the above (1) to (3), in which an absolute value of birefringence $\Delta$n is in a range of $1.0 \times 10^{-3}$ to $5.0 \times 10^{-1}$.
(5) An actuator including the actuator fiber according to any one of the above (1) to (4) in at least a part of the actuator.
(6) A fiber product including the actuator fiber according to any one of the above (1) to (4) in at least a part of the fiber product.

ADVANTAGEOUS EFFECTS OF INVENTION

Since the actuator fiber of the present invention has a large spring index and flexibility, the actuator fiber can be a member suitable for a soft actuator.

BRIEF DESCRIPTION OF DRAWINGS

FIG. 1 is a schematic diagram of an actuator fiber having a coil spring shape of the present invention.
FIG. 2 is a schematic diagram of a fiber (twisted fiber) which is twisted.
FIG. 3 is a schematic diagram of a non-twisted fiber.
FIG. 4 is a diagram schematically showing a crystal part and an amorphous part inside the non-twisted fiber.

DESCRIPTION OF EMBODIMENTS

Hereinafter, the present invention will be described in detail together with a desirable embodiment.

The actuator fiber of the present invention needs to be made of a thermoplastic resin. A force generated when a molecular chain in the amorphous part of the thermoplastic resin is subjected to orientational relaxation by heating is used as a driving source of the motions, though a mechanism of expansion and contraction motions of the actuator fiber of the present invention will be described later.

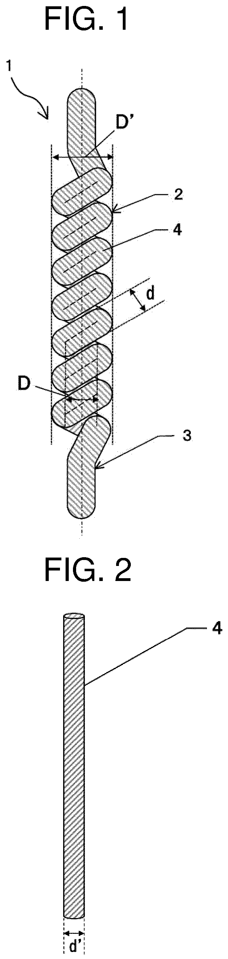

The actuator fiber of the present invention needs to have a coil spring shape including a coil portion where the fiber is formed into a spiral shape. The coil spring shape mentioned here is the same shape as that of a coil spring defined by JIS B 0103: 2012 (spring term). Since the actuator fiber has a coil spring shape, it is possible to generate the expansion and contraction motions of the actuator fiber. As shown in FIG. 1, the actuator fiber of the present invention preferably has a tension coil spring shape composed of a coil portion 2 where the fiber is formed in a spiral shape and an end portion 3 which is not in a spiral shape.

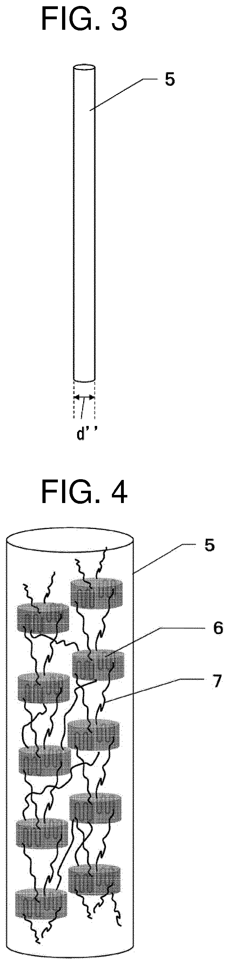

As shown in FIG. 2, the coil portion 2 of the actuator fiber 1 is preferably composed of a fiber 4 (hereinafter referred to as twisted fiber 4) which is twisted. In the fiber made of a thermoplastic resin (non-twisted fiber 5 as shown in FIG. 3), a molecular chain is present inside the fiber so as to form regions of the crystal part 6 and the amorphous part 7 as shown in FIG. 4, and in general, the fiber contracts in a fiber axis direction by heating since the orientation relaxation of the molecular chain in mainly the amorphous part 7 progresses. When twist is applied to the non-twisted fiber, an original axial direction of the fiber becomes a spiral direction along a twisting angle of the twisted fiber. At this time, when the orientational relaxation of the molecular chain in the amorphous part progresses by heating, a force acts in a direction of eliminating the twisting caused by twist, namely an untwisting direction.

Since the actuator fiber of the present invention has a coil portion, in the case where the coil portion is composed of a twisted fiber having the same twisting direction, the orientational relaxation of the molecular chain in the amorphous part occurs by heating the actuator fiber, and a force in the untwisting direction acts on the twisted fiber constituting the coil portion. Accordingly, a force for reducing a coil pitch is generated, and a tensile force is generated in the axial direction of the actuator fiber. According to such a mechanism, in order to generate a tensile force in the axial direction of the actuator fiber of the present invention, winding wires adjoining each other of the coil portion need to be in a non-contact state. In particular, in a case where the actuator fiber has a tension coil spring shape in which winding wires adjoining each other are in contact in an initial state, it is necessary to apply a load larger than a load (initial tension) at which the contact of the winding wires adjoining each other starts to be eliminated to one end of the fiber to set the winding wires in a non-contact state. When the actuator fiber is heated to generate a tensile force and then cooled, the generation of the tensile force stops and the actuator fiber returns to the state before heating again. By repeating the heating and cooling, the actuator fiber of the present invention exhibits expansion and contraction motions.

The actuator fiber of the present invention needs to have a spring index D/d of 1.7 or more. The spring index, which is an index expressed by D/d, in the present invention is a ratio of an average diameter D of the coil portion to a fiber diameter d of a fiber constituting the actuator fiber of the present invention. The fiber diameter d can be determined, for example, by measuring a length of the width of the twisted fiber indicated by d in FIG. 1 at ten randomly extracted points of the coil portion in an image obtained by imaging a side surface of the actuator fiber with a digital microscope at a magnification of 300 times, and calculating an average value of the lengths. The average diameter D of the coil portion 2 can be determined by measuring an outer diameter of the coil portion at ten randomly extracted points of the coil portion in an image taken similarly, calculating an average value of the outer diameters, and subtracting the value of the fiber diameter d from the value of the average outer diameter of the coil portion.

In general, the larger the spring index is, the more flexible the spring becomes, and the more easily the coil portion stretches against the load. That is, in the case where the load applied to the coil portion along the coil axis direction is constant, the amount of deflection of the coil portion increases as the spring index increases. In addition, since the spring becomes flexible, it is possible to disperse an external force received due to tension, compression, bending, or the like in the coil axial direction, which leads to a longer life of the spring. On the other hand, the smaller the spring index is, the harder the spring is, and the more difficult the coil portion stretches by the load. That is, in the case where the load applied to the coil portion along the coil axis direction is constant, the amount of deflection of the coil portion decreases as the spring index decreases. In addition, since the spring hardens, a larger load can be applied, but stress concentration is likely to occur when an external force is received, and the lifetime tends to be shortened. In the case where a coil spring made of metal is designed in consideration of such characteristics, the spring index is typically set in a range of 4.0 to 22.0.

However, since a material of the actuator fiber of the present invention is a thermoplastic resin, the design range of the spring index is different from that of the coil spring made of metal. As a result of intensive studies, the present inventors have found that, in the actuator fiber made of a thermoplastic resin, by setting the spring index D/d to 1.7 or more, the actuator fiber is rich in flexibility and exhibits an actuator function without impairing a feeling of wearing in the case where the actuator fiber is incorporated into a fiber product such as clothes. In addition, in the case where the actuator fiber is incorporated into a fiber product such as clothes, in view of enhancing followability to body movement, the spring index D/d is preferably 2.5 or more. Furthermore, in view of reducing an oppressive feeling of the body during wearing, the spring index D/d is more preferably 4.0 or more. In the case where the spring index D/d is too large, the form of the actuator fiber of the present invention becomes unstable. Therefore, a substantial upper limit of the spring index D/d is 20.0 in view of stably generating expansion and contraction motions.

The actuator fiber of the present invention preferably has a glass transition temperature (hereinafter Tg) of 150°C or lower determined from measurement with a differential scanning calorimeter (hereinafter DSC). The Tg in the present invention refers to a value calculated using an analysis software by measuring in a temperature range from 20°C to a temperature being 30°C higher than the end of a melting peak (exothermic peak) under a condition of a temperature rising rate of 10°C/min by use of DSC.

As described above, the driving source of the contraction motion of the actuator fiber of the present invention is derived from the orientational relaxation of the molecular chain in the amorphous part due to heat. Therefore, when a temperature of the actuator fiber exceeds the Tg due to heating, the orientational relaxation rapidly progresses, and the contraction motion is caused instantaneously. That is, the Tg of the actuator fiber means a temperature at which the contraction motion is possible, and the higher the Tg is, the more heating is required for the contraction motion of the actuator fiber, and the lower the Tg is, the less the contraction motion by heating is possible. In view of reducing heating energy required for the contraction motion, Tg is more preferably 120°C or lower. In the case where the actuator fiber of the present invention is incorporated into a fiber product such as clothes, it is desirable to exhibit expansion and contraction motions at a lower temperature in consideration of dimensional stability against heat of a raw material to be combined. In addition, the lower the Tg is, the richer the actuator fiber is in flexibility, and it is also possible to avoid impairing the feeling of wearing when the actuator fiber is incorporated into a fiber product such as clothes. From such a viewpoint, the Tg is more preferably 80°C or lower, and particularly preferably 60°C or lower. In addition, the lower the Tg of the actuator fiber is, the less heating is necessary to perform the contraction motion and the richer the flexibility is. Therefore, a lower limit of the Tg of the actuator fiber is not particularly provided. However, stable expansion and contraction motions cannot be obtained unless the form of the actuator fiber when the expansion and contraction motions by heating and cooling the actuator fiber are repeatedly exhibited is stable. Therefore, in view of enhancing form stability during heating and cooling, the Tg is more preferably 0°C or higher, and still more preferably 20°C or higher.

The actuator fiber of the present invention preferably has crystallinity in a range of 5% to 95% as calculated from the melting heat amount obtained by DSC measurement. The crystallinity can be calculated by the following formula based on a DSC thermogram obtained from measurement by DSC, with a heat amount obtained from a low-temperature crystallization peak (endothermic peak) as a crystallization heat amount (J/g) and a heat amount obtained from the melting peak (exothermic peak) as the melting heat amount (J/g).

Crystallinity (%) = [{ (melting heat amount) - (crystallization heat amount)}/(complete crystal melting heat amount)] $\times$ 100

The main driving source of the contraction motion of the actuator fiber of the present invention is derived from the orientational relaxation of the molecular chain in the amorphous part due to heat, so that the larger the amount of amorphous part present, the larger a contraction force of the actuator fiber when heated. On the other hand, in the case of an amorphous polymer having no crystal part, a region to tie the molecular chain of the amorphous part is not present in the fiber, and the form of the actuator fiber is not stable during heating and cooling, so that stable expansion and contraction motions cannot be obtained. Therefore, the actuator fiber of the present invention preferably has a crystal portion in view of form stability. In view of propelling such a viewpoint and enhancing the form stability during heating and cooling, the crystallinity is more preferably 10% or more. In applications where heating and cooling are repeated at a higher frequency, it is required to further enhance the form stability, and the crystallinity is further more preferably 15% or more. On the other hand, in view of increasing the contraction force during heating, the crystallinity is more preferably 80% or less. In the case of being used as a driving source of an assist suit or the like, a larger contraction force is required, and the crystallinity is further more preferably 60% or less.

An absolute value of birefringence $\Delta$n of the actuator fiber of the present invention is preferably in a range of $1.0 \times 10^{-3}$ to $5.0 \times 10^{-1}$. The birefringence $\Delta$n is calculated by the following formula from values of retardation and a fiber diameter by using a polarizing microscope equipped with a Berek compensator.

$$\text{Birefringence } \Delta n = (\text{retardation}/(\text{fiber diameter})) \times 10^{-3}$$

In the present invention, the birefringence $\Delta$n is calculated by measuring the birefringence of the fiber with the number n of samples being 5, and rounding off the third digit so that an average value thereof becomes two significant digits. Although the birefringence $\Delta$n of the fiber has a positive or negative sign which depends on the kind of the thermoplastic resin, the larger the absolute value thereof, the higher an orientation degree of the molecular chain in the fiber axis direction. The main driving source of the tensile force of the actuator fiber of the present invention is derived from the orientational relaxation of the molecular chain in the amorphous part due to heating, so that the tensile force generated is larger as the orientation degree of the molecular chain is higher, that is, as the value of $\Delta$n is larger. From such a viewpoint, in order to increase the tensile force during heating, $\Delta$n is more preferably $5.0 \times 10^{-3}$ or more. In the case where the actuator fiber of the present invention is incorporated into a fiber product such as an assist suit, a further larger tensile force is required, so that $\Delta$n is further more preferably $1.0 \times 10^{-2}$ or more. In a typical fiber made of a thermoplastic resin, a substantial upper limit of $\Delta$n is about $5.0 \times 10^{-1}$. On the other hand, the higher the orientation degree of the molecular chain in the fiber axis direction, the more likely the fiber is to tear in the fiber axis direction due to friction. That is, the higher $\Delta$n, the more likely fibrillation to occur by rubbing or the like, and the lower wear resistance. Therefore, the orientation degree of the molecular chain is preferably reduced in an appropriate range in order to improve the wear resistance of the actuator fiber of the present invention. From such a viewpoint, in order to obtain high wear resistance, $\Delta$n is more preferably $3.0 \times 10^{-1}$ or less. In addition, when the actuator fiber of the present invention is incorporated into a fiber product such as clothes, friction, rubbing, or the like during wearing occurs at a high frequency during wearing, so that further higher wear resistance is required, and $\Delta$n is further more preferably $1.0 \times 10^{-1}$ or less.

The thermoplastic resin constituting the actuator fiber of the present invention is preferably a thermoplastic resin having Tg of 150°C or lower, since the Tg of the actuator fiber is preferably 150°C or lower. The thermoplastic resin is selected from nylon 6,10, nylon 6,12 and nylon 10,10, or in specific examples not covered by the invention from polyester, polypropylene, ethylene tetrafluoroethylene, a perfluoroalkyl vinyl ether copolymer, polyphenylene sulfide, polyether ether ketone, polyoxymethylene, and polyurethane.

Specific examples of the polyester include: aromatic polyesters such as polyethylene terephthalate, polypropylene terephthalate, polybutylene terephthalate, and polyhexamethylene terephthalate; aliphatic polyesters such as polylactic acid, polyglycolic acid, polyethylene adipate, polypropylene adipate, polybutylene adipate, polyethylene succinate, polypropylene succinate, polybutylene succinate, polyethylene sebacate, polypropylene sebacate, polybutylene sebacate, and polycaprolactone; and copolyesters obtained by copolymerizing these polyesters with a copolymerization component. However, the polyester is not limited thereto.

Specific examples of the copolymerization component of the polyester include: aromatic dicarboxylic acids such as phthalic acid, isophthalic acid, terephthalic acid, 5-sodium sulfoisophthalic acid, 1,5-naphthalene dicarboxylic acid, 2,6-naphthalene dicarboxylic acid, 2,2'-biphenyl dicarboxylic acid, 3,3'-biphenyl dicarboxylic acid, 4,4'-biphenyl dicarboxylic acid, and anthracene dicarboxylic acid; aliphatic dicarboxylic acids such as malonic acid, fumaric acid, maleic acid, succinic acid, itaconic acid, adipic acid, azelaic acid, sebacic acid, 1,11-undecane dicarboxylic acid, 1,12-dodecane dicarboxylic acid, 1,14-tetradecane dicarboxylic acid, 1,18-octadecane dicarboxylic acid, 1,2-cyclohexane dicarboxylic acid, 1,3-cyclohexane dicarboxylic acid, 1,4-cyclohexane dicarboxylic acid, and a dimer acid; aromatic diols such as catechol, naphthalene diol, and bisphenol; and aliphatic diols such as ethylene glycol, trimethylene glycol, tetramethylene glycol, hexamethylene glycol, diethylene glycol, polyethylene glycol, polypropylene glycol, neopentyl glycol, and cyclohexane dimethanol. However, the copolymerization component is not limited thereto. These copolymerization components may be used in one kind alone or in combination of two or more kinds thereof.

The polypropylene may be a homopolymer or a copolymer with a copolymerization component, and examples of the form of the copolymer include a block copolymer and a graft copolymer, but are not limited thereto. As the copolymerization component, an unsaturated compound containing a polar functional group having a high affinity for a dye can be suitably used, and examples thereof include a carboxylic acid group, a carboxylic anhydride group, a carboxylate salt group, a carboxylate ester group, and a carboxylic acid amide group. Specific examples of the copolymerization component include: unsaturated carboxylic acids such as maleic acid, fumaric acid, itaconic acid, acrylic acid, and methacrylic acid; unsaturated carboxylic acid anhydrides such as maleic anhydride and itaconic anhydride; unsaturated carboxylate salts such as sodium methacrylate and sodium acrylate; unsaturated carboxylate esters such as vinyl acetate, vinyl propionate, methyl acrylate, ethyl acrylate, methyl methacrylate, and maleic acid monoethyl ester; and unsaturated carboxylic acid amides such as acrylic amide and maleic acid monoamide. However, the copolymerization component is not limited thereto. These copolymerization components may be used in one kind alone or in combination of two or more kinds thereof.

Examples of the polyurethane include a polymer compound obtained by a reaction of three components of a diisocyanate, a polyol, and a chain extender.

Specific examples of the diisocyanate include trimethylene diisocyanate, tetramethylene diisocyanate, hexamethylene diisocyanate, isophorone diisocyanate, 1,3-bis(isocyanato methyl) cyclohexane, 1,4-bis(isocyanato methyl) cyclohexane, 1,3-cyclohexane diisocyanate, 1,4-cyclohexane diisocyanate, 2,2'-diphenylmethane diisocyanate, 2,4'-diphenylmethane diisocyanate, 4,4'-diphenylmethane diisocyanate, 1,5-naphthalene diisocyanate, 2,4-toluene diisocyanate, 2,6-toluene diisocyanate, and diphenylmethane diisocyanate, but the diisocyanate is not limited thereto.

Examples of the polyol include polyether polyol, polyester polyol, polycaprolactone polyol, and polycarbonate polyol, but the polyol is not limited thereto. A polyether polyol is obtained by ring-opening addition polymerization of a low molecular weight polyol or a low molecular weight polyamine with an alkylene oxide. A polyester polyol is obtained by a condensation reaction or an ester exchange reaction of a low molecular weight polyol with a polyvalent carboxylic acid, a polyvalent carboxylate ester, a polyvalent carboxylic anhydride, and a polyvalent carboxylic acid halide. A polycaprolactone polyol is obtained by ring-opening polymerization of a low molecular weight polyol with a caprolactone. A polycarbonate polyol is obtained by addition polymerization of a low molecular weight polyol with a carbonate.

Specific examples of the low molecular weight polyol include ethylene glycol, propylene glycol, 1,3-propanediol, 1,4-butanediol, 1,5-pentanediol, 1,6-hexanediol, cyclohexanediol, cyclohexane dimethanol, bisphenol, diethylene glycol, dipropylene glycol, glycerin, trimethylol propane, pentaerythritol, diglycerin, xylitol, sorbitol, mannitol, and dipentaerythritol sucrose, but the low molecular weight polyol is not limited thereto. Specific examples of the low molecular weight polyamine include ethylene diamine, 1,3-propane diamine, 1,4-butane diamine, 1,6-hexamethylene diamine, 1,4-cyclohexane diamine, and hydrazine, but the low molecular weight polyamine include is not limited thereto. Specific examples of the alkylene oxide include ethylene oxide, propylene oxide, butylene oxide, and tetrahydrofuran, but the alkylene oxide is not limited thereto. Specific examples of the polyvalent carboxylic acid include oxalic acid, malonic acid, fumaric acid, maleic acid, succinic acid, itaconic acid, adipic acid, phthalic acid, isophthalic acid, terephthalic acid, and dimer acid, but the polyvalent carboxylic acid is not limited thereto. Specific examples of the polyvalent carboxylate ester include methyl ester and ethyl ester of the polyvalent carboxylic acid, but the polyvalent carboxylate ester is not limited thereto. Specific examples of the polyvalent carboxylic anhydride include oxalic anhydride, succinic anhydride, maleic anhydride, phthalic anhydride, and trimellitic anhydride but the polyvalent carboxylic anhydride is not limited thereto. Specific examples of the polyvalent carboxylic acid halide include oxalic acid dichloride and adipic acid dichloride, but the polyvalent carboxylic acid halide is not limited thereto. Specific examples of the caprolactone include ε-caprolactone, but the caprolactone is not limited thereto. Specific examples of the carbonate include ethylene carbonate and dimethyl carbonate, but the carbonate is not limited thereto.

Specific examples of the chain extender include ethane diol, 1,2-propanediol, 1,3-propanediol, 1,4-butanediol, 1,6-hexanediol, diethylene glycol, and dipropylene glycol, but the chain extender is not limited thereto.

In view of incorporating the actuator fiber of the present invention into a fiber product such as an assist suit or clothes in general, the thermoplastic resin is selected from nylon 6,10, nylon 6,12, and nylon 10,10 so that the flexibility is rich, the feeling of wearing when the actuator fiber is incorporated into a fiber product such as clothes is not impaired, and mechanical strength of the clothes is excellent.

The actuator fiber of the present invention may be composed of only one kind of fiber made of thermoplastic resin, or may be composed of two or more kinds of fiber made of thermoplastic resin.

A heating method for generating the tensile force of the actuator fiber of the present invention is not particularly limited, and heat sources such as hot air, steam, and various hot gases, various resistance heating elements that convert electric energy into thermal energy, and heat generation using light energy of solar light, infrared rays, ultraviolet rays, lasers, electromagnetic waves, and the like can be used. In view of precisely controlling the expansion and contraction motions of the actuator fiber, it is preferable to use a resistance heating element that can be heated by an electric signal. In addition, in order to accelerate the cycle of the expansion and contraction motions, it is required to lower the temperature of the actuator fiber as fast as possible and return to the initial state. From such a viewpoint, it is also suitable to improve cooling efficiency by combining air cooling using a ventilation fan or the like, liquid cooling using various refrigerants such as water, or a cooling device such as a Peltier element.

In order to electrically control the expansion and contraction motions of the actuator fiber of the present invention and increase a response speed of the expansion and contraction motions to input of the electric signal, the actuator fiber may be combined with a resistance heating element in view of converting electric energy into thermal energy with high efficiency. The resistance heating element is not particularly limited as long as it is a material that generates heat by electrical resistance, and suitable examples thereof include carbon-based materials such as carbon black, carbon nanotubes, and carbon fibers, metal particles such as gold, silver, and copper, and conductive polymers such as polyacetylene, polyaniline, polythiophene, and polypyrrole. These may be kneaded into each thermoplastic resin in advance and contained inside the fiber, and the resistance heating elements may be compounded and fixed on the surface of the actuator fiber of the present invention by a method such as coating or chemical bonding. The resistance heating elements may be incorporated into the actuator fiber of the present invention in a form of a molded body such as films, fibers, and electric wires obtained by processing the resistance heating elements themselves thereinto or a compound obtained by compounding the resistance heating elements with general-purpose molded bodies, the molded body or the compound being in contact with the actuator fiber, for example by twisting them together.

The fiber diameter d of the actuator fiber of the present invention is not particularly limited, and is preferably in a range of 1 μm to 10,000 μm in view of generating practical expansion and contraction motions as an actuator. In an application where the actuator fiber is incorporated into the fiber product such as clothes and are required to have high followability to movement of the body during wearing, the fiber diameter d is more preferably in the range of 1 μm to 1,000 μm in view of more improving the flexibility of the actuator fiber.

It is also suitable to use a plurality of actuator fibers connected in parallel or in series in order that the actuator fiber can be applied to a larger load while making use of the flexibility, which is a feature of the actuator fiber of the present invention.

A method for producing the actuator fiber of the present invention is not particularly limited, but an example of the following production methods is described. The fiber (monofilament or multifilament) made of a thermoplastic resin is cut into a desired length, and an upper end of the fiber is fixed by binding or the like to a shaft of a stirrer equipped with a rotary motor. Next, a weight is attached to a lower end of the fiber, and the rotary motor of the stirrer is operated. A rotation direction of the motor is the same as a direction perpendicular to the fiber axis, and twisting is applied by the shaft and a spindle of the stirrer to the fiber whose both ends are fixed. When rotation of the motor is continued and twisting is continued as it is, a limit of single twisting is exceeded, and the twisted fiber is folded and start coiling while rotating. The coiling herein means that the twisted fiber is formed into a coil shape. From the coiling start point, coiling progresses over the entire fiber, and finally the actuator fiber having a coil spring shape is obtained. The actuator fiber having a coil spring shape produced in this manner is in a state in which winding wires adjoining each other are in close contact, but it is also possible to separate the winding wires adjoining each other by partially untwisting the actuator fiber after production and to adjust the actuator fiber to a non-contact state. A rotation direction of the coil portion formed in the fiber coincides with a rotation direction of a stirrer motor, and by adjusting the rotation direction of the motor, the actuator fiber having a coil spring shape in a right rotation direction or a left rotation direction can be desirably produced.

In addition, a load of the weight attached to the lower end of the fiber also affects coiling, and in the case where the load is insufficient, the fiber is tangled while twisting is applied. On the other hand, in the case where the load is excessive, the fiber is broken while twisting is applied. It is necessary to select a load within an appropriate range that does not cause such tangle and breakage of the fiber, and in the case of using a fiber having the same fiber diameter d within the appropriate range, the average diameter D of the formed coil portion decreases as the load increases, and the spring index D/d tends to decrease; the average diameter D of the coil portion increases as the load decreases, and the spring index D/d tends to increase. In addition, in order to increase the spring index D/d of the actuator fiber, namely to increase the average diameter D of the coil portion, it is also possible to form the coil portion while winding the fiber around a mandrel.

The obtained actuator fiber having a coil spring shape may be plastically deformed by excessive twisting applied during production, and the form may be fixed. In addition, for the purpose of stabilizing the form of the actuator fiber, heat setting may be conducted in the same manner as the fiber made of an ordinary thermoplastic resin.

The actuator fiber of the present invention exhibits reversible expansion and contraction motions by heating and cooling when used as an actuator, and thus can be suitably used in a precision apparatus and a micromachine used in robots, fields of the electronic information, and biotechnology or healthcare. In addition, since the actuator fiber of the present invention is rich in flexibility, the actuator fiber can be suitably used as a support robot or device such as an assist suit that assists a force necessary for walking or working, and clothes or a fiber product.

EXAMPLES

The actuator fiber of the present invention is specifically described with reference to the following Examples. The following evaluations were performed on Examples and Comparative Examples.

A. Fiber Diameter d

In an image obtained by imaging a side surface of the actuator fiber with a digital microscope VHX2000 manufactured by Keyence Corporation at a magnification of 300 times, a length of the width of the twisted fiber 4 indicated by d in FIG. 1 is measured at ten randomly extracted points of the coil portion, and a second decimal place of an average thereof was rounded off to a first decimal place to obtain a value as the fiber diameter d ($\mu$m).

B. Average Diameter D of Coil Portion

In an image obtained by imaging a side surface of the actuator fiber with a digital microscope VHX2000 manufactured by Keyence Corporation at a magnification of 300 times, an outer diameter of the coil portion is measured at ten randomly extracted points of the coil portion, and a second decimal place of an average thereof was rounded off to a first decimal place to obtain a value as an average outer diameter D' ($\mu$m) of the coil portion. Next, a value obtained by subtracting the value of the fiber diameter d from the obtained value of the average outer diameter D' of the coil portion by the following formula was defined as the average diameter D ($\mu$m) of the coil portion.

(Average diameter D ($\mu$m) of coil portion) = (average outer diameter D' of coil portion) - (fiber diameter d)

C. Spring Index D/d

By using the fiber diameter d and the average diameter D of the coil portion, a value calculated by the following formula and obtained by rounding off a second decimal place to a first decimal place was defined as the spring index D/d.

$$\text{(Spring index D/d)} = \text{(average diameter D of coil portion)/(fiber diameter d)}$$

D. Tg and Crystallinity (DSC Measurement)

By using DSC2000 manufactured by TA Instruments, differential scanning calorimetry of the actuator fiber was performed in a temperature range from 20°C to a temperature being about 30°C higher than a temperature at the end of the melting peak (exothermic peak) under a temperature rising condition of 10°C/min. As an analysis software, by using Universal Analysis 2000 manufactured by TA Instruments, Tg (°C) was obtained in a DSC thermogram obtained by measurement.

Further, the heat amount obtained from the endothermic peak was defined as a crystallization heat amount (J/g), the heat amount obtained from the exothermic peak is defined as a melting heat amount (J/g), and a first decimal place of a value calculated by the following formula was rounded off to obtain an integer value as the crystallinity. The complete crystal melting heat amount (J/g) of the various thermoplastic resins uses the values described in each of Examples.

Crystallinity (%) = {((melting heat amount) - (crystallization heat amount))/(complete crystal melting heat amount)} × 100

E. Birefringence $\Delta n$

The coil portion of the actuator fiber was cut out, retardation (nm) was measured with an OLYMPUS BH-2 polarizing microscope equipped with a Berek compensator, and the fiber diameter d ($\mu$m) obtained in the item A was used to obtain the birefringence $\Delta n$ by the following formula. The measurement was performed at random five points of the coil portion, and a value calculated by rounding off a third digit so that an average value thereof becomes two significant digits was defined as the birefringence $\Delta n$.

$$\text{Birefringence } \Delta n = (\text{retardation}/(\text{fiber diameter d})) \times 10^{-3}$$

F. Expansion and Contraction Motion Rate

In a constant temperature and humidity chamber maintained at a temperature of 25.0°C and humidity of 60.0% RH, a weight of a load (g) calculated from the following formula was attached to the lower end of the actuator fiber so that the actuator fiber was suspended in a state in which the upper end thereof was fixed, and a tension of 20 MPa was applied in a state in which the winding wires adjoining each other were not in contact. The fiber cross-sectional area (mm$^2$) is a value calculated by using the fiber diameter d ($\mu$m).

$$\text{Tension (MPa)} = \text{load} \times 0.0098/(\text{fiber cross-sectional area})$$

In the case where the winding wires adjoining each other were in contact when the actuator fiber has no load, in order to exclude an effect of an initial tension, an initial load Pi (g) corresponding to the calculated initial tension was applied by the following method, and then a tension of 20 MPa was applied.

That is, in a constant temperature and humidity chamber maintained at a temperature of 25.0°C and humidity of 60.0% RH, the actuator fiber in which the winding wires adjoining each other were in contact was suspended in a state in which the upper end thereof was fixed, a force gauge was attached to the lower end thereof, the actuator fiber was tensed in the coil axial direction, and the load P1 (g) when the adjoining winding wires were in a non-contact state and the length of the coil portion of the actuator fiber was 1.1 times was read. Subsequently, the actuator fiber was tensed in the coil axis direction, and a load P2 (g) when the length of the coil portion was 1.2 times was read to calculate an initial load Pi from the following formula.

$$\text{Pi (g)} = 2P1 - P2$$

This state was set as an initial state, and the actuator fiber was heated with hot air of Tg of the actuator fiber + 70°C by using a heat gun, contracted, and stopped being heated when the contraction was completed, and allowed to cool until returning to the initial state. A fiber length before heating is L1 (mm), a fiber length during heating contraction is L2 (mm), and the expansion and contraction motion rate was calculated by the following formula.

$$\text{Expansion and contraction motion rate (\%)} = \{(L1 - L2)/L1\} \times 100$$

Here, (L1 - L2) represents a fiber length difference before and after heating, namely displacement due to heating contraction, and the expansion and contraction motion rate is a displacement rate to the fiber length before heating. For the same sample, the cycle of heating and cooling is repeated five times, an average value of the expansion and contraction motion rates was obtained, and then a second decimal place of the average value was rounded off to a first decimal place to obtain a value as the expansion and contraction motion rate of the actuator fiber.

In the case where the Tg of the actuator fiber was lower than 25°C, the actuator fiber was heated with hot air at 95°C by using a heat gun to evaluate the expansion and contraction motion rate.

G. Initial Length Change Rate during Expansion and Contraction Motions

A fiber length L3 (mm) in the initial state of the actuator fiber to which a tension was applied by the method described in the item F was measured. Thereafter, the cycle of heating and cooling was repeated 50 times by the method described in the item F, and a fiber length L4 (mm) of a sample when the 50th cooling was completed was measured. By using the measured values, the initial length change rate was calculated by the following formula, by rounding off a second decimal place to a first decimal place. Here, |L3 - L4| represents an absolute value of a difference between a fiber length in the initial state before 50 cycles of heating and cooling and a fiber length in the initial state after 50 cycles of heating and cooling. In the case where the calculated initial length change rate was less than 5.0%, it was determined as passed. Incidentally, the smaller the initial length change rate is, the more excellent the initial length change rate is, and the minimum value is 0.0%.

$$\text{Initial length change rate (\%)} = (|L3 - L4|/L3) \times 100$$

H. Wearing Test of Fiber Product Including Actuator Fiber

The actuator fibers obtained by the Examples were incorporated as warp yarns at a ratio of one to ten warp yarns of a cotton plain weave fabric (English cotton gauge 40S: spun yarn, weaving density of warp and weft: 50 yarns/inch (2.54 cm) respectively) to produce a plain weave fabric having a length and a width of 10 cm respectively. Subsequently, the obtained plain weave fabric was sewn so as to surround upper arm portions of left and right sleeves of a long sleeve shirt made of cotton in one round. In sewing the plain weave fabric, a direction of the sleeves and a direction of the actuator fiber coincide with each other. The produced shirt was worn by 20 test subjects having experience in wearing test evaluation for 5 years or more, and after walking for 10 minutes, flexibility, followability, and a feeling of oppression were evaluated as follows.

With respect to the flexibility, "feel flexibility extremely strongly" was set as 5 points, "strongly feel flexibility" was set as 4 points, "feel flexibility" was set as 3 points, "hardly feel flexibility" was set as 2 points, and "not feel flexibility at all" was set as 1 point. An average point of score given by each of the 20 test subjects was calculated, and a sample having an average point of 3.0 or more was determined as passed.

With respect to the followability, "feel followability extremely strongly" was set as 5 points, "feel followability strongly" was set as 4 points, "feel followability" was set as 3 points, "hardly feel followability" was set as 2 points, and "not feel followability at all" was set as 1 point. An average point of score given by each of the 20 test subjects was calculated, and a sample having an average point of 3.0 or more was determined as passed.

With respect to the feeling of oppression, "not feel oppression at all" was set as 5 points, "hardly feel oppression" was set as 4 points, "slightly feel oppression" was set as 3 points, "feel oppression" was set as 2 points, and "feel oppression strongly" was set as 1 point. An average point of score given by each of the 20 test subjects was calculated, and a sample having an average point of 3.0 or more was determined as passed.

Example 1

A polyethylene terephthalate (PET) resin (T755M manufactured by Toray Industries, Inc.) was continuously supplied to a uniaxial extruder and melt-extruded at a temperature of 280°C. The extruded molten polymer was measured by a gear pump, fed into a spinning pack, spun out from a spinneret for a round section, and then extended to produce a polyethylene terephthalate monofilament having a diameter of 130.5 $\mu$m.

An upper end of the produced polyethylene terephthalate monofilament was connected and fixed to the shaft of the stirrer equipped with a rotary motor, and then a 27 g weight was attached to a lower end of the monofilament to apply a tension of 20 MPa as a tension during coiling. Subsequently, the rotary motor of the stirrer was operated at 200 rpm to produce actuator fibers. The obtained actuator fibers and the evaluation results of the wearing test are shown in Table 1. The complete crystal melting heat amount of polyethylene terephthalate was 140.1 J/g.

Examples and Reference Examples 2 to 10

The examples were carried out in the same manner as Example 1 except that the thermoplastic resin in Example 1 was changed into nylon 6 resin ("Amilan" polyamide CM1017 manufactured by Toray Industries, Inc., melt extrusion temperature: 260°C) in Reference Example 2, nylon 6,6 resin ("Amilan" polyamide CM3001-N manufactured by Toray Industries, Inc., melt extrusion temperature: 290°C) in Reference Example 3, nylon 6,10 resin ("Amilan" polyamide CM2001 manufactured by Toray Industries, Inc., melt extrusion temperature: 270°C) in Example 4, nylon 6,12 resin ("VESTAMID" D18 manufactured by Daicel-Evonik Ltd., melt extrusion temperature: 215°C) in Example 5, nylon 10,10 resin ("VESTAMID" Terra DS manufactured by Daicel-Evonik Ltd., melt extrusion temperature: 250°C) in Example 6, high-density polyethylene (HDPE) resin (HI-ZEX 5000SR manufactured by Prime Polymer Co., Ltd., melt extrusion temperature: 180°C) in Reference Example 7, linear low-density polyethylene (LLDPE) resin (NEO-ZEX 2015M manufactured by Prime Polymer Co., Ltd., melt extrusion temperature: 170°C) in Reference Example 8, polypropylene (PP) resin (FY5 manufactured by Japan Polypropylene Corporation, melt extrusion temperature: 230°C) in Example 9, and polyvinylidene fluoride (PVDF) resin (KF polymer #1100 manufactured by Kureha Corporation, melt extrusion temperature: 230°C) in Reference Example 10. The obtained actuator fibers and the evaluation results of the wearing test are shown in Table 1. The complete crystal melting heat amount of the thermoplastic resin of each Example was 229.8 J/g for nylon 6, 255.4 J/g for nylon 6,6, 253.9 J/g for nylon 6,10, 258.0 J/g for nylon 6,12, 244.0 J/g for nylon 10,10, 286.7 J/g for high-density polyethylene and linear low-density polyethylene, 209.0 J/g for polypropylene, and 105.0 J/g for polyvinylidene fluoride.

[Table 1]

| | | Example 1 | Example 2 (ref.) | Example 3 (ref.) | Example 4 | Example 5 | Example 6 | Example 7 (ref.) | Example 8 (ref.) | Example 9 | Example 10 (ref.) |
|---|---|---|---|---|---|---|---|---|---|---|---|
| Actuator fibers | Thermoplastic resin | PET | Nylon 6 | Nylon 6,6 | Nylon 6,10 | Nylon 6,12 | Nylon 10,10 | HDPE | LLDPE | PP | PVDF |
| | Tension during coiling [MPa] | 20 | 20 | 20 | 20 | 20 | 20 | 20 | 20 | 20 | 20 |
| | Fiber diameter d [$\mu$m] | 130.5 | 126.9 | 122.3 | 130.6 | 122.8 | 137.4 | 152.9 | 155.6 | 148.7 | 110.3 |
| | Average diameter D of coil portion [$\mu$m] | 234.9 | 228.4 | 220.1 | 235.1 | 221.0 | 247.3 | 275.2 | 280.1 | 267.7 | 198.5 |
| | D/d | 1.8 | 1.8 | 1.8 | 1.8 | 1.8 | 1.8 | 1.8 | 1.8 | 1.8 | 1.8 |
| | Glass transition temperature Tg [°C] | 69 | 47 | 49 | 48 | 50 | 37 | -125 | -120 | 0 | -40 |
| | Crystallinity [%] | 36 | 28 | 36 | 32 | 31 | 29 | 61 | 34 | 43 | 39 |
| | Birefringence $\Delta$n | $1.8 \times 10^{-1}$ | $7.2 \times 10^{-2}$ | $8.4 \times 10^{-2}$ | $5.6 \times 10^{-2}$ | $5.8 \times 10^{-2}$ | $4.8 \times 10^{-2}$ | $4.3 \times 10^{-2}$ | $3.4 \times 10^{-2}$ | $3.7 \times 10^{-2}$ | $9.0 \times 10^{-2}$ |
| | Expansion and contraction motion rate [%] | 10.4 | 4.7 | 4.8 | 11.9 | 11.5 | 12.5 | 4.3 | 4.5 | 13.1 | 4.6 |
| | Initial Length Change Rate during Expansion and Contraction Motions [%] | 1.5 | 2.2 | 1.9 | 0.9 | 1.1 | 0.8 | 4.8 | 4.6 | 4.2 | 4.4 |
| Wearing test | Flexibility | 3.7 | 3.6 | 3.4 | 4.3 | 4.1 | 4.5 | 4.4 | 4.5 | 4.5 | 3.5 |
| | Followability | 4.0 | 3.5 | 3.4 | 4.2 | 4.2 | 4.3 | 3.1 | 3.0 | 4.4 | 3.2 |
| | Feeling of oppression | 3.9 | 3.7 | 3.6 | 4.1 | 4.1 | 4.1 | 4.2 | 4.3 | 4.3 | 3.6 |

PET: polyethylene terephthalate; HDPE: high-density polyethylene; LLDPE: linear low-density polyethylene; PP: polypropylene, PVDF: polyvinylidene fluoride

Examples 11 and 12 and Comparative Examples 1 and 2

The examples were carried out in the same manner as Example 1 except that the fiber diameter d in Example 1 was changed as shown in Table 2. The obtained actuator fibers and the evaluation results of the wearing test are shown in Table 2.

In Comparative Examples 1 and 2, since the spring index D/d was small, the actuator fibers were a hard spring, and the expansion and contraction motion rate was low. Also in the wearing test, evaluations of all the flexibility, followability, and feeling of oppression were low, and the wearing feeling was poor.

[Table 2]

| | | Example 11 | Example 12 | Comparative Example 1 | Comparative Example 2 |
|---|---|---|---|---|---|
| Actuator fibers | Thermoplastic resin | PET | PET | PET | PET |
| | Tension during coiling [MPa] | 20 | 20 | 20 | 20 |
| | Fiber diameter d [$\mu$m] | 200.5 | 180.3 | 100.2 | 50.4 |
| | Average diameter D of coil portion [$\mu$m] | 822.1 | 468.8 | 130.3 | 35.3 |
| | D/d | 4.1 | 2.6 | 1.3 | 0.7 |
| | Glass transition temperature Tg [°C] | 69 | 69 | 69 | 69 |
| | Crystallinity [%] | 34 | 35 | 37 | 40 |
| | Birefringence $\Delta$n | $1.6 \times 10^{-1}$ | $1.7 \times 10^{-1}$ | $1.9 \times 10^{-1}$ | $2.1 \times 10^{-1}$ |
| | Expansion and contraction motion rate [%] | 13.3 | 11.8 | 5.7 | 2.4 |
| | Initial Length Change Rate during Expansion and Contraction Motions [%] | 1.9 | 1.8 | 1.4 | 1.6 |
| Wearing test | Flexibility | 4.3 | 4.1 | 2.7 | 1.3 |
| | Followability | 4.5 | 4.2 | 2.3 | 1.2 |
| | Feeling of oppression | 4.5 | 4.3 | 1.8 | 1.1 |
| PET: polyethylene terephthalate | | | | | |

Examples 13 and 14 and Comparative Examples 3 and 4

The examples were carried out in the same manner as Example 4 except that the tension during coiling in Example 4 was changed as shown in Table 3. The obtained actuator fibers and the evaluation results of the wearing test are shown in Table 3.

In Comparative Examples 3 and 4, since the spring index D/d was small, the actuator fibers were a hard spring, and the expansion and contraction motion rate was low. Also in the wearing test, evaluations of all the flexibility, followability, and feeling of oppression were low, and thus the wearing feeling was poor.

[Table 3]

| | | | Example 13 | Example 14 | Comparative Example 3 | Comparative Example 4 |
|---|---|---|---|---|---|---|
| Actuator fibers | | Thermoplastic resin | Nylon 6,10 | Nylon 6,10 | Nylon 6,10 | Nylon 6,10 |
| | | Tension during coiling [MPa] | 13 | 23 | 27 | 40 |
| | | Fiber diameter d [$\mu$m] | 130.7 | 130.5 | 130.4 | 130.2 |
| | | Average diameter D of coil portion [$\mu$m] | 496.7 | 221.9 | 208.6 | 117.2 |
| | | D/d | 3.8 | 1.7 | 1.6 | 0.9 |
| | | Glass transition temperature Tg [°C] | 48 | 48 | 48 | 48 |
| | | Crystallinity [%] | 30 | 33 | 34 | 37 |
| | | Birefringence $\Delta$n | $4.8 \times 10^{-2}$ | $6.0 \times 10^{-2}$ | $6.5 \times 10^{-2}$ | $9.0 \times 10^{-2}$ |
| | | Expansion and contraction motion rate [%] | 13.2 | 10.6 | 8.5 | 3.1 |
| | | Initial Length Change Rate during Expansion and Contraction Motions [%] | 1.1 | 0.9 | 0.9 | 0.8 |
| Wearing test | | Flexibility | 4.7 | 4.1 | 3.6 | 1.5 |
| | | Followability | 4.5 | 3.8 | 2.7 | 1.3 |
| | | Feeling of oppression | 4.7 | 3.5 | 2.4 | 1.2 |

INDUSTRIAL APPLICABILITY

By the actuator fiber of the present invention, an actuator that reversibly expands and contracts by heating and cooling is obtained, and can be suitably used in a precision apparatus and a micromachine used in robots, fields of electronic information, and biotechnology or healthcare, and since the actuator fiber of the present invention is rich in flexibility, the actuator fiber can be suitably used as a support robot or device such as an assist suit that assists a force necessary for walking or working, and clothes or a fiber product.

Although the present invention has been described in detail with reference to specific embodiments, it will be apparent to those skilled in the art that various changes and modifications can be made without departing from the scope of the present invention as defined in the claims. This application is based on Japanese Patent Application No. 2018-168810 filed on September 10, 2018.

REFERENCE SIGN LIST

1: Actuator Fiber
2: Coil portion
3: End portion
D: Average diameter of coil portion
D': Average outer diameter of coil portion
d: Fiber diameter
4: Fiber (twisted fiber) which is twisted
d': Diameter of twisted fiber
5: Non-twisted fiber
d": Diameter of non-twisted fiber
6: Crystal part
7: Amorphous part

**Claims**

1. An actuator fiber (1) made of a thermoplastic resin, the actuator fiber (1) having a coil spring shape, wherein a spring index D/d is 1.7 or more when an average diameter of a coil portion (2) is represented by D and a fiber diameter is represented by d, and
**characterized in that** the thermoplastic resin is selected from the group consisting of nylon 6,10, nylon 6,12, nylon 10,10, and a combination thereof.

2. The actuator fiber (1) according to claim 1, wherein a glass transition point measured by a differential scanning calorimeter is 150°C or lower.

3. The actuator fiber (1) according to claim 2, wherein the glass transition point is 80°C or lower.

4. The actuator fiber (1) according to any one of claims 1 to 3, wherein a crystallinity calculated from a melting heat amount measured by a differential scanning calorimeter is in a range of 5% to 95%.

5. The actuator fiber (1) according to claim 4, wherein the crystallinity is in a range of 15% or more and 60% or less.

6. The actuator fiber (1) according to any one of claims 1 to 5, wherein an absolute value of birefringence $\Delta$n is in a range of $1.0 \times 10^{-3}$ to $5.0 \times 10^{-1}$.

7. An actuator comprising the actuator fiber (1) according to any one of claims 1 to 6 in at least a part of the actuator.

8. A fiber product comprising the actuator fiber (1) according to any one of claims 1 to 6 in at least a part of the fiber product.

9. A fiber product according to claim 8, wherein the fiber product comprises clothes.


**Patentansprüche**

1. Aktuatorfaser (1), die aus einem wärmehärtenden Harz besteht, wobei die Aktuatorfaser (1) eine Spiralfederform aufweist, wobei ein Federindex D/d 1,7 oder mehr beträgt, wenn D für einen mittleren Durchmesser eines Spiralabschnitts (2) und d für einen Faserdurchmesser steht, und
**dadurch gekennzeichnet, dass** das wärmehärtende Harz aus der aus Nylon 6.10, Nylon 6.12, Nylon 10.10 und einer Kombination daraus bestehenden Gruppe ausgewählt ist.

2. Aktuatorfaser (1) nach Anspruch 1, wobei ein durch ein Differentialscanningkalorimeter gemessener Glasübergangspunkt 150 °C oder weniger beträgt.

3. Aktuatorfaser (1) nach Anspruch 2, wobei der Glasübergangspunkt 80 °C oder weniger beträgt.

4. Aktuatorfaser (1) nach einem der Ansprüche 1 bis 3, wobei eine Kristallinität, die anhand eines durch ein Differentialscanningkalorimeter gemessenen Schmelzhitzeausmaßes berechnet wird, in einem Bereich von 5 % bis 95 % liegt.

5. Aktuatorfaser (1) nach Anspruch 4, wobei die Kristallinität in einem Bereich von 15 % oder mehr und 60 % oder weniger liegt.

6. Aktuatorfaser (1) nach einem der Ansprüche 1 bis 5, wobei ein absoluter Doppelbrechungsindexwert $\Delta$n in einem Bereich von $1,0 \times 10^{-3}$ bis $5,0 \times 10^{-1}$ liegt.

7. Aktuator, der eine Aktuatorfaser (1) nach einem der Ansprüche 1 bis 6 in zumindest einem Teil des Aktuators umfasst.

8. Faserprodukt, das eine Aktuatorfaser (1) nach einem der Ansprüche 1 bis 6 in zumindest einem Teil des Faserprodukts umfasst.

9. Faserprodukt nach Anspruch 8, wobei das Faserprodukt Kleidung umfasst.

**Revendications**

1. Fibre d'actionneur (1) constituée d'une résine thermoplastique, la fibre d'actionneur (1) ayant une forme de ressort en spirale, dans laquelle un indice de ressort D/d est de 1,7 ou plus lorsqu'un diamètre moyen d'une portion de spirale (2) est représenté par D et le diamètre de fibre est représenté par d, et
**caractérisée en ce que** la résine thermoplastique est choisie parmi le groupe consistant en nylon 6,10, nylon 6,12, nylon 10,10, et une combinaison de ceux-ci.

2. Fibre d'actionneur (1) selon la revendication 1, dans laquelle un point de transition vitreuse mesuré par un calorimètre à balayage différentiel est de 150°C ou moins.

3. Fibre d'actionneur (1) selon la revendication 2, dans laquelle le point de transition vitreuse est de 80 °C ou moins.

4. Fibre d'actionneur (1) selon l'une quelconque des revendications 1 à 3, dans laquelle une cristallinité calculée à partir d'une quantité de chaleur de fusion mesurée par un calorimètre à balayage différentiel est comprise entre 5 % et 95 %.

5. Fibre d'actionneur (1) selon la revendication 4, dans laquelle la cristallinité est comprise entre 15 % ou plus et 60 % ou moins.

6. Fibre d'actionneur (1) selon l'une quelconque des revendications 1 à 5, dans laquelle une valeur absolue de biréfringence An est comprise entre $1,0 \times 10^{-3}$ et $5,0 \times 10^{-1}$.

7. Actionneur comprenant la fibre d'actionneur (1) selon l'une quelconque des revendications 1 à 6 dans au moins une partie de l'actionneur.

8. Produit fibreux comprenant la fibre d'actionneur (1) selon l'une quelconque des revendications 1 à 6 dans au moins une partie du produit fibreux.

9. Produit fibreux selon la revendication 8, dans lequel le produit fibreux comprend des vêtements.

# FIG. 1

# FIG. 2

# FIG. 3

# FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014022667 A
- WO 2017022146 A

- JP 2018168810 A

**Non-patent literature cited in the description**

- **HAINES et al.** *Science*, 2014, vol. 343, 868-872